# EUROPEAN PATENT APPLICATION

(11) **EP 0 849 713 A1**
(43) Date of publication of application: **24.06.1998**
(21) Application number: 96203576.2
(22) Date of filing: 17.12.1996
(51) Int. Cl.: G07F 7/10, H04L 9/32, H04L 9/30, H04L 9/06

(54) **A method and a system for the encryption of codes**

(71) Applicant: TELEFONAKTIEBOLAGET L M ERICSSON (publ), 126 25 Stockholm (SE)
(72) Inventor: Blank, Chip, 4811 RM Breda (NL)
(74) Representative: Dohmen, Johannes Maria Gerardus

(57) **Abstract**

A method and a system for the encryption of codes, wherein a received code (20) is transformed following a predetermined deterministic transformation process (21) generating a transformed code. The transformed code is encrypted using an encryption algorithm (22), such that the transformed code and the encrypted transformed code do not exceed a predetermined number of positions. In a further processing step, by comparing (23) the encrypted transformed code with a plurality stored encrypted transformed codes, a validation signal is provided. If the received code is authentic, further processing (24) is allowed. If the received code is not valid, no further processing (25) should be possible. The invention is in particular suitable for operation in Intelligent Network (IN) telecommunication systems, for access purposes in a Virtual Private Network (VPN), for example, not requiring more information than the code entered by a particular subscriber to validate access to services provided by the VPN.

## Description

### Field of the Invention

The present invention relates generally to a method and a system for the encryption of codes, such as Personal Identification Number (PIN) codes, and more particularly to a method and a system for the encryption of codes for use in telecommunication systems for secret communication, identity verification and/or access control purposes.

### Background of the Invention

The level of security provided by an encryption process depends not only on the type or encryption algorithm used but also on the code length, i.e. the number of positions of a code to be encrypted, and, in the case of (public) key encryption systems, the length of the encryption key.

Known public key encryption systems such as the Rivest, Shamir, Aldehman (RSA) and Data Encryption Standard (DES) private key type encryption algorithms operate with encryption keys having a length exceeding 350 bits. Such lengthy keys are required in order to provide a sufficient level of security for the encryption of relatively short codes, such as four digit PIN codes, for example. However, the encoding of relatively short codes using large encryption keys results in encrypted codes taking up a relatively large number of positions.

Usually, the code, such as a PIN code, is encrypted by a first entity and transferred to a second entity where the received information is further processed such to provide validation information whether the code provided is authentic or not, for example.

Apart from problems arising from the required storage of a lengthy encryption key, in particular in the case of incorporating such an encryption key in existing hardware, the time required for performing the encryption process can be too long for several practical applications, such as providing access to telecommunication services, for example. Those skilled in the art will appreciate that in telecommunication systems switching times are of the order of milliseconds. Accordingly, encryption techniques exceeding such switching times are not fit for use in telecommunication switching equipment for service access purposes, for example.

Further, telecommunication systems, in particular telecommunication systems making use of public telecommunication network facilities, are vulnerable to applications of decryption techniques, such as various forms of frequency analysis or discernible relationships between the number of access code positions and the number of positions of encrypted digits or the pattern of values of encrypted digits, for example.

In order to provide a sufficient level of encryption security from relatively short codes or by using relatively short encryption keys, several solutions have been provided.

US-A-5,289,542 relates to a caller identification system for telephone switches using the RSA or DES encryption algorithm. The method involves combining the originating an destination subscriber number into a single code which is encrypted in the telephone switch and send to the destination. This method requires that both originating and terminating subscriber numbers are known to form a unique identity of sufficient length to provide a required level of encryption security.

US-A-4,736,423 relates to the protection of the identity of a bank account user, using a modified public key encryption system. The method involves the storage of a partial key on a magnetic stripe card, and upon the reading of the card, a computer will derive the modulus and keys for encryption and decryption. The user enters a secret PIN code which is used with the account number and regenerated keys to verify the user identity. In this method, the PIN code itself is not encrypted, because the identity is derived from the account number plus the PIN plus the derived keys.

US-A-5,073,935 provides a manner to reduce the number of digits produced by an RSA encryption by first using a hashing algorithm in conjunction with DES to produce a first transformation of plain text. The resulting cipher text is than encrypted/decrypted using the standard RSA public key encryption algorithm. This methodology is designed to reduce message length in secure communications. Although this method provides reduction of the number of encrypted digits in order to solve storage problems, the method requires the use of three algorithms RSA, DES and a hashing code. Such a combination of algorithms will cause speed problems in the case of implementation in a high speed processing environment such as a telephone switch. In addition, this approach does not guarantee conformance to a maximum allowed number of output digits for the input of variable length codes, for example.

US-A-4,969,190 describes an example of a cipher block chaining method for enhancing RSA encryption strength. If used with a very small RSA encryption key and relatively small codes, the code, such as a PIN, can be deduced from simple frequency analysis and even visual analysis of the resulting encrypted code text.

### Summary of the Invention

It is an object of the present invention to provide a method to strengthen the encryption of relatively small codes, such as four or six digits PIN codes, in an environment where storage space limitations put a requirement on the number of positions of encrypted codes, while maintaining a "medium" strength encryption, i.e. a not absolutely unbreakable encryption. An example of this would be the protection of access codes in a telecommunication network from the casual viewing, from decryption techniques such as various forms of frequency analysis or easily discernible relationship between the number of access code digits and the number of encrypted digits or the pattern of values of the encrypted digits. This, to prevent collection and misuse of codes from the side of a network operator, for example.

It is another object of the present invention to provide a method for the encryption of codes, such as PIN codes, having a variable size, however such that the encrypted code does not exceed existing hardware provisions, in particular storage space available in existing hardware.

It is a further object of the present invention to provide an encryption method which ensures a suitable level of protection for use with public key encryption algorithms, such as RSA, or private key encryption algorithms such as DES, using an encryption key of limited length.

It is a further object of the present invention to provide an encryption method which can be processed at a sufficient fast rate for use in high speed processing environments, such as in modern electronic programm-controlled telecommunication switching systems.

It is in particular an object of the present invention to provide a method for the encryption of codes for use in so-called Intelligent Network (IN) telecommunication systems, not requiring more information than the code entered by a particular subscriber to validate access to services provided by the telecommunication system.

It is also an object of the present invention to provide a system for the encryption of codes suitable for use in a telecommunication environment such as a Virtual Private Network (VPN) telecommunication system.

These and other objects, advantages and features of the present invention are provided by a method for the encryption of codes using an encryption algorithm, and comprising the steps of receiving a code and transforming the received code following a predetermined deterministic transformation process generating a transformed code. The transformed code is encrypted using the encryption algorithm. This all such that the transformed code and the encrypted transformed code do not exceed a predetermined number of positions.

In the method according to the invention, the required level of encryption security is achieved by a proper transformation of a received code, such as a PIN code, before the encryption thereof. In order to guarantee that the same transformed code is always generated from the same received code, a predetermined, deterministic transformation process is implemented. This process can be controlled such that the code, the transformed code and the encrypted transformed code do not exceed a predetermined number of positions, thus meeting limited storage space requirements.

With the method according to the present invention, a sufficient level of encryption security is achieved by applying a single encryption algorithm, which can also be a public key encryption algorithm, to meet encryption times required in modern electronic programm-controlled telecommunication switching equipment.

The transformation process according to the present invention can be likewise selected to meet speed requirements, for example using one of a combination of deterministic modulus formation based on the value and/or positions of a received code, hash function formation based on the value and positions of a received code, position scrambling, position shifting, position modulation, insertion of misleading patterns, and hashed encoding.

The transformation process can be selected and arranged such that the information pattern content of the encrypted transformed code does not exceed a predetermined level. This level can be set such that the code can not be easily detected by applying available decryption techniques, such as various forms of frequency analysis and not containing easily discernible relationships between the number of code positions and the number of encrypted code positions, thereby providing the required level of security.

Public key encryption algorithms are preferred from an operational point of view. With the method according to the present invention, public encryption algorithms such as RSA and/or a private key algorithm as DES operating with relatively small encryption keys will provide the required level of encryption security.

With the present invention, codes of variable length, such as four or six or even more digit PIN codes, for example, can be used as a unique source data, not requiring any other subscriber or identification data for use in secret communication, identity verification and/or access control purposes in a variety of applications requiring a medium level of encryption security.

The method according to the invention adds back some of the security lost from a reduction of an encryption key. Although the encryption key may be derivable with a shorter length, by the proper transformation of pre-processing according to the invention, the code is sufficiently hidden so that it ones again becomes a very difficult task to verify the correctness of a particular retrieved encryption key.

The method according to the invention is very suitable for use in telecommunication systems, wherein a subscriber originates an access code for the access of services provided by the telecommunication system, such as in a VPN telecommunication system.

The method according to the present invention is particularly suitable for use with modern processor controlled IN telecommunication systems, comprising Subscriber Service Point (SSP) equipment to which subscriber terminals are connected and Subscriber Control Point (SCP) equipment for signalling and control purposes. The transformation and the encryption of the code can be completely dealt with at the SSP, because no other data than the code provided by a subscriber connecting to the SSP are required.

In the case of a sufficiently hidden encryption algorithm or when using a public key encryption algorithm, a validation signal indicating that the received code is authorized to access a requested service, for example, can be provided from a comparison of an encrypted transformed received code and stored encrypted transformed codes. Decryption is not required, thereby enhancing the overall processing speed.

The invention relates also to a system for the encryption of codes using an encryption algorithm, and comprising receiver means for receiving a code and transformer means for transforming the received code following a predetermined deterministic transformation process. For the encryption of the transformed code encryption means are provided operative to encrypt the transformed code in accordance with an encryption algorithm implemented.

For the execution of the transformation process disclosed above and/or an encryption algorithm, the transformer means and/or the encryption means can be processor controlled

To validate received codes, in a further embodiment of the system according to the invention, comparator means are provided, operative to compare encrypted transformed received codes with a plurality of encrypted transformed codes stored in storage means, such as a data base. In case of comparison a validation signal is provided by the comparator means.

In a yet further embodiment of the system according to the invention, a management system has been provided, comprising means for storing management system data for the purpose of storing new or amended encrypted transformed codes. Accordingly, a subscriber can change a PIN code or access code for example, whenever required.

The system according to the invention can be advantageously incorporated in processor controlled telecommunication processing equipment, such as SSP and/or SCP equipment of IN telecommunication systems.

Accordingly, the invention relates also to SSP equipment arranged for coupling with a telecommunication network and comprising electronic programm-controlled switching equipment, wherein said electronic programm-controlled switching equipment comprises code transformer means, encryption means for encrypting transformed codes and comparator means for comparing encrypted transformed codes with a plurality of stored encrypted transformed codes.

The above mentioned and other features and advantages of the present invention will now be discussed in the following description with reference to the accompanying drawings.

### Brief Description of the Drawings

Figure 1 shows a simplified block diagram of a typical Intelligent Network (IN) telecommunication system concept, incorporating the method and system according to the present invention.

Figure 2 shows a flow chart diagram illustrating a preferred embodiment of the method according to the present invention.

### Detailed Description of the Embodiments

The invention will now be disclosed, without the intention of a limitation, in a telecommunication system for identity verification and access control purposes.

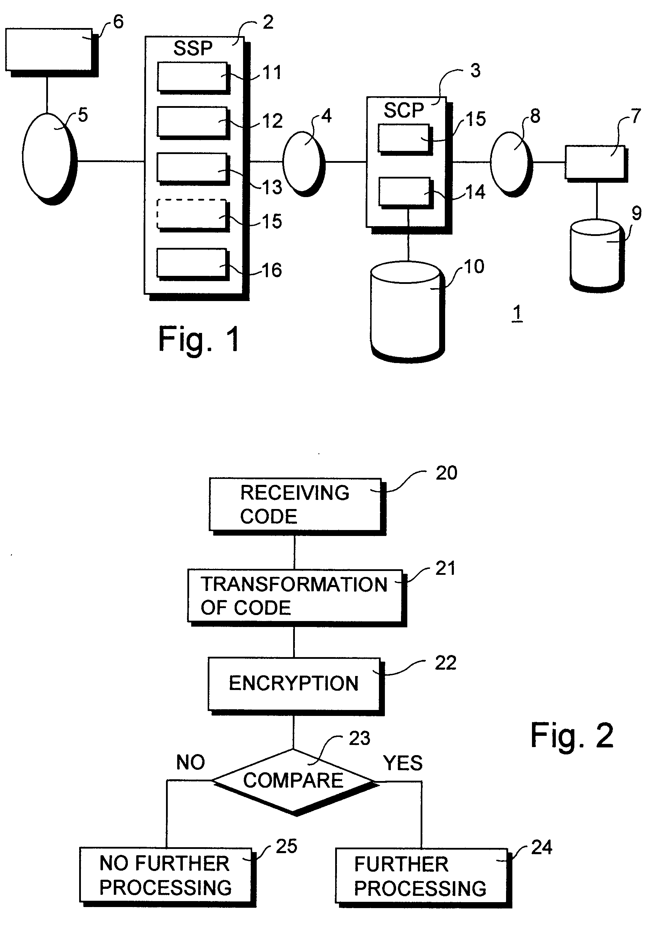

Figure 1 shows a typical Intelligent Network (IN) telecommunication system 1, comprising Subscriber Service Point (SSP) equipment 2 and Subscriber Control Point (SCP) equipment 3. The SSP equipment 2 and SCP equipment 3 are connected by a signalling network 4. The SSP equipment 2 connects to subscriber equipment 6 through a telecommunication network 5. Optional management system equipment 7 connects to the SCP equipment 3 through a network 8. The management system equipment 7 further connects to a data base 9, comprising management control and information data. The SCP equipment 3 connects to a data base 10 storing subscriber related data for providing service to the subscriber equipment 6 connected to the SSP equipment 2.

In accordance with the present invention, the SSP equipment 2 is provided with code receiver means 11, transformer means 12 and encryption means 13, connected as indicated. For the purpose of clarity, further circuitry of the SSP equipment 2 are not shown, such as means for handling calls from subscriber equipment 6, call transmitter/receiver means etc. In general, the SSP equipment 2 is a modern electronic programm-controlled telecommunication switching device, such as an AXE (Trademark) telephone switch or the like.

The SCP equipment 3 is a processor controlled device providing signalling and service access control to the SSP equipment 2. Those skilled in the art will appreciate that the SSP equipment 2 may comprise a plurality of several independent SSP units each providing service to particular groups of subscriber equipments. Such as geographically spread subscriber equipment 6 and clustered into regions, each region being serviced by a separate SSP unit, for example. Each such SSP unit comprises subscriber call handling means (not shown), code receiver means 11, code transformer means 12 and encryption means 13, as disclosed above.

Likewise, the SCP equipment 3 may be comprised of several SCP units operative to provide subscriber call control in a particular region, for example. The data base 10 may be a data base comprising data applicable to subscribers of a (plurality of) region(s) or even of the complete telecommunication system 1, for example.

Putting the method according to the present invention into practice, the system 1 operates as follows. The subscriber equipment 6 has no encryption capability. A code, such as a PIN code for accessing services provided by the telecommunication network 1, for example, is entered by a subscriber at the subscriber equipment 6 using the conventional telephone key pad. Accordingly, the subscriber will provide a code built up of a plurality of the digits 0-9 and # and *. It is of course possible to limit the code to comprise only the digits 0-9, for example.

The code entered from the subscriber equipment 6 is transferred through the telecommunication network 5 to the code receiving means 11 of the relevant SSP equipment 2. The code may comprise a fixed number of positions, for example four, or a variable number of positions, such as six or even more.

During or after the receipt of the code, it is transformed by the transformer means 12 following a deterministic transformation process. The generated transformed code is subjected to an encryption process by the encryption means 13, resulting in an encrypted transformed code. All further communication through the IN telecommunication system 1 and the storage of the code is in its encrypted form.

Assuming that relevant information for the validation of a code of a particular subscriber is stored in the system 1, for example in the data base 10 or in dedicated storage means 14 of the SCP equipment 3, a received code, transformed and encrypted by the SSP equipment 2 can be further processed in either the SCP equipment 3 or the SSP equipment 2.

In a first embodiment, the encrypted transformed code is transferred from the SSP equipment 2 to the SCP equipment 3 via the signalling network 4. To this end, the SCP equipment 3 is provided with means 15 for processing the received encrypted transformed code, in order to provide a validation signal.

Processing of the encrypted transformed code can be carried out either by decrypting and comparing the transformed received code with transformed codes stored, or even by subjecting the transformed code to a reversed transformation process, such to receive the original code for comparison with stored original codes.

However, in a preferred embodiment of the present invention, the means 15 are arranged to directly compare the encrypted transformed received codes with encrypted transformed codes stored. This in order to speed up the validation process, to meet the requirements set by modern telecommunication switching systems.

The means 15 can also be incorporated in the SSP equipment 2, operating likewise, and indicated by broken lines. In such case the code data have to be preferably stored in or at the relevant SSP equipment 2, e.g. in dedicated storage means 16.

Apart from the SSP equipment 2, in the telecommunication system 1 only encrypted transformed codes are transferred, making it very difficult to detect a subscriber code from the operator premises, for example.

When a subscriber is entering a code for the first time, the SSP equipment 2 transforms and encrypts the code and transfers the encrypted transformed code to the SCP equipment 3 and to the optional management system equipment 7 and related data basis 9, 10, 14 or 16.

If a subscriber wishes to replace a previously entered code, a replacement procedure will be carried out under control of means 15 resulting in a replacement of the relevant stored data in the data base 10 and/or the storage means 14, 16 and sent to the optional management system equipment 7 and related data base 9.

In existing SSP equipment 2 and SCP equipment 3 made up of AXE (Trademark) telephone switching equipment, for the storage of subscriber numbers 28 x 4 bit positions are available. With the present invention, it can be warrant that the length of the encrypted transformed code is such that this storage base will not be exceeded. In the case of a public key algorithm, with the present invention, a sufficient medium level of security can be provided with an encryption key the length of which fits into the storage base available.

A preferred embodiment of the method according to the present invention will now be disclosed, for the purpose of example only, in connection with the flow chart diagram shown in fig. 2.

The method comprises in general the steps of receiving a code, i.e. block 20, transforming the received code, i.e. block 21, encrypting the transformed received code, i.e. block 22, comparing the encrypted transformed received code with stored encrypted transformed codes, i.e. decision block 23, and providing a validation signal indicating whether the received code is authentic to a subscriber, i.e. decision "YES" such that further processing can be allowed, i.e. block 24, or if no comparison exist, i.e. decision "NO", further processing should be denied, i.e. block 25.

Within the context of the present invention, it is important that the transformed code and the encrypted transformed code do not exceed a predetermined number of positions, such to meet hardware limitations in existing equipment. The received code may take a fixed or variable length, while the transformation process is arranged to provide a transformed code not exceeding the said limitations as to its length.

Several suitable transformation techniques are available, however the transformation process has to be implemented in a deterministic manner, such that the same transformed or extended code is always generated from the same starting code. This rules out the use of most random generator based solutions, which would also most probably

Suitable and efficient methods that might be used for the transformation of the received code are deterministic modulus based on values and/or positions of received code positions, sequentially generating additional or "false" code positions, or hash function based on the values and positions of existing positions and also creating "false" positions. Both methods can be enhanced in any order by digit position scrambling, bit shifting, further modulation of the positions or bits and hashed encoding. A suitable combination of the above transformation methods can be made subject to an analysis of the information pattern content of a transformed code after encryption thereof, such that only transformations are applied by which the information pattern content of the transformed, encrypted codes do not exceed a predetermined level. This to avoid decryption by easily discernible relationships from analysing the information pattern content of the encrypted transformed codes, for example.

Further, a suitable transformation process can also include the intensional insertion of misleading patterns, i.e. modulus ranges, in order to make the encrypted transformed code as less as possible vulnerable to applications of decryption techniques such as various forms of frequency analysis or casual viewing, for example.

The above-mentioned transformation techniques are itself known in the art and need no further description. Reference is made to "The Art of Computer Programming", by D.E. Knuth, Volume 2, Addison-Wesley 2^{nd} Edition, 1981; "Numerical Recipes in C - The Art of Scientific Computing", Cambrdige University Press, 2^{nd} Edition; "Introduction to Algorithms", by T.H. Cormen, C.E. Leiserson, R.L. Rivest MIT Press, 1990; "Algorithms in Number Theory", by A.K. Lenstra, H.W. Lenstra Jr., in "Handbook of Theoretical Computer Science", J. van Leeuwen, editor. MIT Press, 1990; A Design Principle for Hash Functions", by I. Damgard, in "Advances in Cryptology", Crypto 1989, pgs. 416-427, Springer-Verlag 1990; and "Analysis and Design of Cryptographic Hash Functions", by B. Preneel, Phd Thesis Katholieke Universiteit Leuvene 1993, which are herein incorporated by reference.

Although any suitable encryption method can be applied for the purpose of the present invention, it is preferred to use a public key encryption algorithm, such as an RSA type encryption algorithm. By these encryption algorithms, public and private keys are generated. The key encryption algorithm, such as an RSA type encryption algorithm. By these encryption algorithms, public and private keys are generated. The public key is retained and the private key is discarded, or securely stored by a trusted system administrator. In the preferred use of the method according to the invention, wherein the encrypted transformed codes are compared, the private key is not required and can be discarded, thereby enhancing the system security.

Encryption algorithms suitable for use with the present invention are itself known in the art, reference is made to "Applied Cryptography", by Bruce Shneier, 2^{nd} Edition, John Wiley & Sons 1995; and "A Course in Number Theory and Cryptography", by N. Koblitz, Springer-Verlag 1987, which are herein incorporated by reference.

Even with a relatively small encryption key, limited by existing hardware storage requirements, the method according to the invention provides a medium encryption security, not absolutely unbreakable but providing enough security for its use in access provision of Virtual Private Networks (VPN), for example. Preferably, the method according to the invention is implemented, such that the relevant codes, augmented transformed codes, encrypted transformed code, and if applicable encryption keys take up the maximum number of positions allowed by the system incorporating the method according to the invention.

In an actual implementation of the method according to the invention in SSP and SCP equipment, no changes to existing hardware or data bases are required and only minimal changes and additions to existing software. At the subscriber end no additional security equipment is required, a conventional telephone key pad suffices.

Because the method according to the invention operates only with the code received, without the need for additional identification data of a subscriber or user, the method can be applied for a number of applications, beyond the illustrated access of telecommunication services, such as for electronic fund transfer, transfer of medical data etc.

## Claims

1. A method for the encryption of codes using an encryption algorithm, characterized by the steps of receiving a code, transforming said received code following a predetermined deterministic transformation process generating a transformed code and encrypting said transformed code using said encryption algorithm, such that said transformed code and said encrypted transformed code do not exceed a predetermined number of positions.

2. A method according to claim 1, wherein said encryption algorithm having an encryption key, and wherein said transformed code is encrypted using said encryption algorithm and encryption key, and wherein said encryption key does not exceed said predetermined number of positions.

3. A method according to any of the previous claims, wherein said transformation process produces a transformed code, the information pattern content of which, after encryption, does not exceed a predetermined level.

4. A method according to any of the previous claims, wherein said transformed code is formed by generating additional code positions following either one or a combination of:
- deterministic modulus formation based on the value and/or positions of a received code;
- hash function formation based on the value and positions of a received code;
- position scrambling;
- position shifting;
- position modulation;
- insertion of misleading patterns, and
- hashed encoding.

5. A method according to claim 4, wherein said received code is transformed such that said transformed code always takes up the maximum number of allowed positions, independent of the length of the received code.

6. A method according to any of the previous claims, dependent on claim 2, wherein said transformed code is encrypted using a public key encryption algorithm, in particular a Rivest, Shamir, Aldehman (RIA) or a Data Encryption Standard (DES) type private key encryption algorithm.

7. A method according to any of the previous claims, wherein said encrypted transformed code is compared with a plurality of stored encrypted transformed codes, and in case of comparison, a validation signal is provided.

8. A method according to any of the previous claims, wherein said code is a Personal Identification Number (PIN) code.

9. Use of the method according to any of the previous claims in a telecommunication system, in particular a Virtual Private Network (VPN) system, for the encryption of codes originating from subscribers of said telecommunication system to validate access to a requested service.

10. Use of the method according to claim 9, wherein said code is originated from remote subscriber equipment, said code is received, transformed and encrypted by a first network entity of said telecommunication network, and wherein said encrypted transformed code is stored in a data base unit accessible from said first network entity or a second network entity.

11. Use of the method according to claim 9 or 10, wherein said code comprises a plurality of the digits 0-9 and # and * of a standard telephone key pad.

12. Use of the method according to any of the claims 9, 10 or 11, wherein the length of said code, said transformed code, said encrypted transformed code and, if applicable, said encryption key comprise a number of positions not exceeding the maximum storage size for access codes or dialled digits in a telecommunication entity, such as a telephone switch.

13. A system for the encryption of codes using an encryption algorithm, said system comprising:
- receiver means for receiving a code;
- transformer means for transforming said received code following a predetermined deterministic transformation process, and
- encryption means, for encrypting said transformed code following said encryption algorithm.

14. A system according to claim 13, wherein said transformer means comprise processor means for the execution of said transformation process following one or a combination of:
- deterministic modulus formation based on the value and/or positions of a received code;
- hash function formation based on the value and positions of a received code;
- position scrambling;
- position shifting;
- position modulation;
- insertion of misleading patterns, and
- hashed encoding.

15. A system according to any of the claims 13 or 14, wherein said encryption means comprise processor means for the execution of said encryption algorithm and storage means for storing an encryption key, wherein said encryption algorithm preferable is a public key encryption algorithm using a Rivest, Shamir, Aldehman (RSA) or a Data Encryption Standard (DES) type private key encryption algorithm.

16. A system according to any of the claims 13, 14 or 15, comprising comparator means for comparing an encrypted transformed code with a plurality of encrypted transformed codes stored in storage means, and means for providing a validation signal in case of comparison of said encrypted transformed code and any of the stored encrypted transformed codes.

17. A system according to any of the claims 13-16, wherein said processor means, comparator means and means for providing a validation signal are equipped in an electronic programm-controlled telecommunication processing system.

18. A system according to claim 17, wherein said telecommunication processing system comprises Subscriber Service Point (SSP) equipment and Subscriber Control Point (SCP) equipment of an Intelligent Network (IN) telecommunication system, wherein subscriber equipment is connected to an SSP and said SSP and SCP are connected by a telecommunication signalling network, wherein said transformer means, said encryption means, said comparator means and said means for providing a validation signal are comprised in said SSP, and wherein said storage means for storing encrypted transformed codes are accessible through either said SSP or SCP.

19. A system according to claim 18, further comprising a management system having means for storing management system data and accessible through said SCP, for the purpose of storing new or amended encrypted transformed codes.

20. Subscriber Service Point (SSP) equipment, arranged for coupling with a telecommunication network and comprising electronic programm-control led switching equipment, wherein said electronic programm-control led switching equipment comprises code transformer means, encryption means for encrypting transformed codes and comparator means for comparing encrypted transformed codes with a plurality of stored encrypted transformed codes.
